Europäisches Patentamt

European Patent Office

Office européen des brevets

(19)

(11) EP 0 579 948 B1

## (12) FASCICULE DE BREVET EUROPEEN

(45) Date de publication et mention
de la délivrance du brevet:
**16.04.1997 Bulletin 1997/16**

(51) Int Cl.6: **H02P 5/408**

(21) Numéro de dépôt: **93109442.9**

(22) Date de dépôt: **14.06.1993**

(54) **Dispositif de commande d'un moteur asynchrone**

Steuersystem für einen Asynchronmotor

Control system for an asynchronous motor

(84) Etats contractants désignés:
**AT BE CH DE DK ES FR GB GR IE IT LI LU NL PT
SE**

(30) Priorité: **23.06.1992 FR 9207771**

(43) Date de publication de la demande:
**26.01.1994 Bulletin 1994/04**

(73) Titulaire: **SMH Management Services AG
CH-2501 Biel (CH)**

(72) Inventeur: **Jeanneret, René
CH-3274 Merzligen (CH)**

(74) Mandataire: **de Montmollin, Henri et al
ICB
Ingénieurs Conseils en Brevets SA
Rue des Sors 7
2074 Marin (CH)**

(56) Documents cités:
EP-A- 0 031 117          EP-A- 0 214 301
EP-A- 0 254 310          US-A- 4 465 961

- IEE PROCEEDINGS B. ELECTRICAL POWER
  APPLICATIONS vol. 127, no. 2 , Mars 1980 ,
  STEVENAGE GB pages 91 - 95 F.BORDRY
  B.DEFORNEL AND B. TRANNOY 'FLUX AND
  SPEED NUMERICAL CONTROL OF A
  VOLTAGE-FED ASYNCHRONOUS INDUCTION
  MACHINE'

## Description

La présente invention concerne un dispositif de commande d'un moteur asynchrone, notamment destiné au système de traction d'un véhicule du type électrique.

Un type de moteur asynchrone connu de l'homme de métier comporte un stator comprenant un premier bobinage et un rotor comprenant un second bobinage fermé électriquement sur lui-même.

Lorsqu'il est relié à une source d'énergie électrique polyphasée produisant un courant d'alimentation alternatif, le premier bobinage engendre un champ magnétique tournant dans la région du rotor. Lorsque le rotor a une fréquence de rotation différente de la fréquence de rotation du champ magnétique tournant, le flux du champ magnétique tournant qui traverse le second bobinage du rotor induit dans ce second bobinage une tension induite engendrant un courant électrique induit dans celui-ci. Dans ce dernier cas, le rotor est soumis à une force électromagnétique, résultante du couplage entre le champ magnétique tournant et le courant électrique induit dans le second bobinage, qui engendre sur l'arbre de sortie du moteur un moment de force.

Pour un moteur asynchrone, on peut définir un glissement S par la formule suivante :

$$S = (FST - FRT) / FST$$

ou :

FST = Fréquence de rotation du champ magnétique tournant engendré par le courant d'alimentation,

FRT = Fréquence de rotation du rotor.

Pour une fréquence statorique FST et une amplitude de la tension d'alimentation données, on observe une augmentation du courant d'alimentation lorsque le glissement S augmente, ainsi qu'une augmentation du moment de force lorsque le glissement varie entre une valeur nulle et une valeur de bascule pour laquelle le moment de force maximum est atteint. La plage de valeurs du glissement comprise entre la valeur nulle et la valeur de bascule définit une plage de travail du moteur pour une fréquence statorique FST et une amplitude de la tension d'alimentation données.

D'un autre côté, pour une fréquence statorique FST et un glissement S donnés, on observe une augmentation du moment de force lorsque l'amplitude de la tension d'alimentation augmente et tant que le moteur n'a pas atteint la saturation magnétique.

On remarquera que la valeur de saturation du flux magnétique traversant le bobinage dudit rotor définit, pour une valeur de la fréquence statorique FST, une valeur de saturation pour l'amplitude de la tension d'alimentation, cette valeur de saturation étant déterminée par la nature et les dimensions du moteur.

Comme le flux magnétique est sensiblement proportionnel à l'amplitude de la tension d'alimentation et inversement proportionnel à la fréquence de cette tension d'alimentation (multiple entier de la fréquence statorique), la courbe de fonctionnement nominale d'un tel moteur asynchrone est généralement caractérisée, sur un graphe donnant l'amplitude de la tension d'alimentation en fonction de la fréquence de cette tension d'alimentation, par une courbe sensiblement affine, correspondant à un moment de force sensiblement constant pour un glissement constant, sur une première plage de fréquence dont la valeur maximale correspond à l'amplitude nominale maximale de la tension d'alimentation, cette courbe sensiblement affine étant prolongée sur une deuxième plage de fréquence succédant à ladite première plage de fréquence par une courbe sensiblement constante située au niveau de l'amplitude nominale maximale de la tension d'alimentation.

La courbe d'alimentation nominale fixe pour chaque fréquence de la tension d'alimentation, respectivement fréquence statorique FST une amplitude fixe et prédéterminée pour la tension d'alimentation. Ainsi, pour une fréquence statorique donnée, la variation du moment de force sur l'arbre du moteur est obtenue par une variation du glissement S lorsque le point de fonctionnement du moteur est situé sur la courbe d'alimentation nominale.

Généralement, la commande d'un moteur asynchrone au moyen d'un dispositif électronique est agencée de manière que le point de fonctionnement reste sur la courbe d'alimentation nominale prédéterminée. Une telle commande d'un moteur asynchrone présente plusieurs inconvénients. Premièrement, étant donné que pour une fréquence d'alimentation donnée on travaille toujours avec une amplitude nominale de la tension, les pertes engendrées sont relativement importantes quel que soit le moment de force demandé, en particulier pour ce qui concerne les pertes fer. Deuxièmement, le fait de varier le glissement S pour varier le moment de force conduit à une utilisation non-optimale du moteur. En effet, le rendement d'un moteur asynchrone dépend de la valeur du glissement et donc de la différence de fréquence entre la fréquence statorique FST et la fréquence rotorique FRT.

Ainsi, dans la plupart des cas, l'amplitude nominale de la tension est trop élevée pour le moment de force demandé et le glissement résultant est relativement faible, ce qui conduit à un régime non-optimal du moteur. Dans d'autres cas, lorsque le moment de force demandé est relativement grand, l'amplitude nominale de la tension d'alimentation, relativement éloignée de l'amplitude de saturation, conduit à une augmentation relativement importante du glissement, ce qui place à nouveau le moteur dans un régime non-optimal, les pertes étant cette fois-ci relativement importantes à cause du fort courant d'alimentation nécessaire. Le document US-A-4,465,961 montre une méthode de contrôle d'un moteur asynchrone, dans laquelle la tension d'alimentation est contrôlée de façon à fournir la puissance nécessaire à la charge.

Dans le document IEEE PROCEEDINGS B. ELECTRICAL POWER APPLICATION, vol. 127, no 2, Mars 1980, pages 91 à 95, un article décrit un modèle théorique d'un moteur asynchrone pour un flux statorique constant. Des équations mathématiques permettant de commander un tel moteur à l'aide de techniques numériques sont établies. Dans ce document, il est prévu un réglage de la fréquence d'alimentation et de l'amplitude de la tension selon un modèle linéaire permettant de régler la vitesse du moteur et le flux statorique.

Le but de la présente invention est de fournir un moteur asynchrone commandé de manière optimale.

A cet effet, l'invention a pour objet un dispositif de commande d'un moteur asynchrone, ce dernier comprenant :

- un bobinage statorique agencé de manière à produire un champ magnétique tournant à une fréquence statorique en réponse à une tension d'alimentation alternative appliquée audit bobinage statorique et produisant un courant d'alimentation;
- un rotor comportant un bobinage rotorique couplé magnétiquement audit bobinage statorique, ce rotor ayant une fréquence rotorique de rotation en réponse audit champ magnétique tournant;

ledit dispositif de commande comprenant des moyens d'alimentation électrique agencés de manière à produire ladite tension d'alimentation avec une amplitude déterminée par la valeur d'un premier signal de commande et avec une fréquence déterminée par la valeur d'un deuxième signal de commande, le premier signal de commande étant fourni à une première entrée desdits moyens d'alimentation électrique par des premiers moyens de réglage de l'amplitude de la tension d'alimentation et le deuxième signal de commande étant fourni, à une deuxième entrée desdits moyens d'alimentation électrique, par des deuxièmes moyens de réglage de la fréquence de la tension d'alimentation, ce dispositif de commande étant caractérisé en ce que lesdits premiers et deuxièmes moyens de réglage sont agencés de manière que, pour chaque valeur de ladite fréquence statorique, ladite amplitude de la tension d'alimentation est susceptible de varier en fonction d'un premier signal de réglage entre une valeur minimale et une valeur maximale définies pour chaque valeur de ladite fréquence statorique, l'ensemble desdites valeurs maximales définissant une courbe limite de tension, ladite fréquence de la tension d'alimentation étant réglée de manière que la différence de fréquence de rotation entre cette fréquence statorique et ladite fréquence rotorique est maintenue sensiblement constante tant que ladite amplitude de la tension d'alimentation a une valeur située en-dessous de ladite courbe limite de tension.

Il résulte de ces caractéristiques une utilisation relativement optimale du moteur sur tout un domaine de fonctionnement. En effet, on observe que le rendement optimal est obtenu pour une différence de fréquence sensiblement constante entre la fréquence statorique et la fréquence rotorique, quelle que soit la fréquence statorique et l'amplitude de la tension d'alimentation et tant que cette dernière engendre un flux magnétique traversant le bobinage du rotor suffisamment éloigné du flux de saturation. La valeur de ladite différence de fréquence conduisant au rendement optimal est déterminée en fonction des caractéristiques du moteur asynchrone utilisé.

Selon une autre caractéristique du dispositif de commande selon l'invention, les premiers et deuxièmes moyens de réglage de la tension d'alimentation sont agencés de manière que ladite différence de fréquence est susceptible d'être augmentée en fonction d'un deuxième signal de réglage lorsque, pour une valeur donnée de la fréquence statorique, l'amplitude de la tension d'alimentation a une valeur égale à ladite valeur maximale définie pour cette valeur de la fréquence statorique.

Il résulte de cette- caractéristique la possibilité d'augmenter la valeur de la puissance fournie par le moteur jusqu'à une valeur limite pour laquelle on exploite au maximum le potentiel du moteur. En effet, la courbe limite de tension peut être située relativement près de la saturation magnétique du moteur et en augmentant le glissement, le moment de force est augmenté tant que la valeur de ce glissement est située dans le domaine de travail.

La commande électronique décrite ci-dessus présente donc une grande souplesse dans l'utilisation des possibilités du moteur. De plus, elle permet de limiter les pertes puisqu'elle permet un fonctionnement en-dessous de l'amplitude nominale de la tension d'alimentation lorsque le moment de force demandé peut être fournit avec une différence de fréquence fixe optimale pour une amplitude de la tension d'alimentation inférieure à cette amplitude nominale.

La présente invention sera mieux comprise à l'aide de la description qui suit, faite en référence aux dessins annexés qui sont donnés uniquement à titre d'exemple et dans lesquels :

- la figure 1 montre un schéma de principe du dispositif de commande d'un moteur asynchrone selon l'invention ;
- la figure 2 représente schématiquement un domaine d'alimentation d'un moteur asynchrone commandé par un dispositif de commande selon l'invention ;
- la figure 3 est un premier mode de réalisation d'un dispositif de commande d'un moteur asynchrone selon l'invention ;
- la figure 4 représente schématiquement une caractéristique définissant une amplitude normalisée de la tension en fonction de la fréquence statorique ;

- la figure 5 représente schématiquement une caractéristique définissant un coefficient d'amplification d'une amplitude normalisée de tension en fonction d'un signal de réglage ;
- la figure 6 représente schématiquement une caractéristique définissant une différence de fréquence de rotation variable entre le champ magnétique statorique tournant et le rotor en fonction d'un signal de réglage ;
- la figure 7 représente schématiquement une caractéristique définissant un domaine de valeurs prédéterminées pour le signal de réglage en fonction de la fréquence de rotation du rotor dans le cas du premier mode de réalisation ;
- la figure 8 est un deuxième mode de réalisation d'un dispositif de commande d'un moteur asynchrone selon l'invention ;
- la figure 9 est un mode de réalisation d'un dispositif électronique produisant le signal de réglage dans le cas du deuxième mode de réalisation.

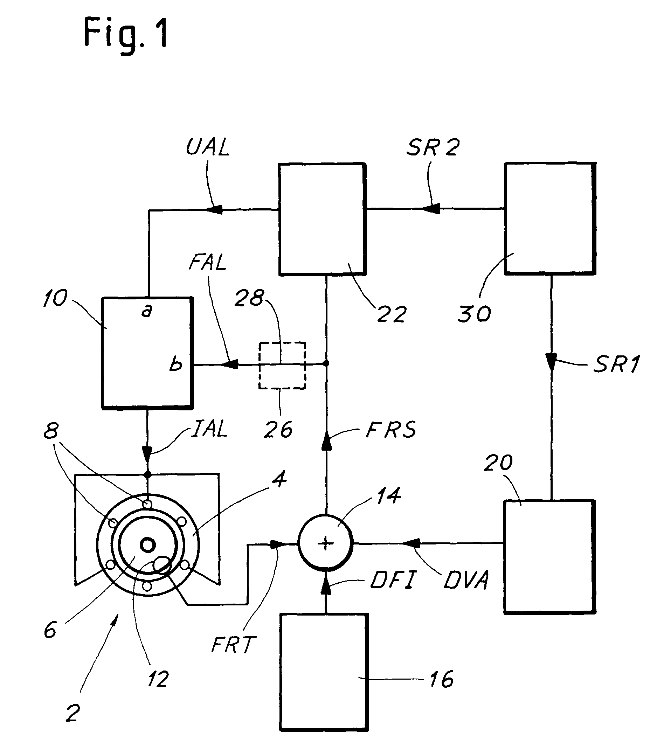

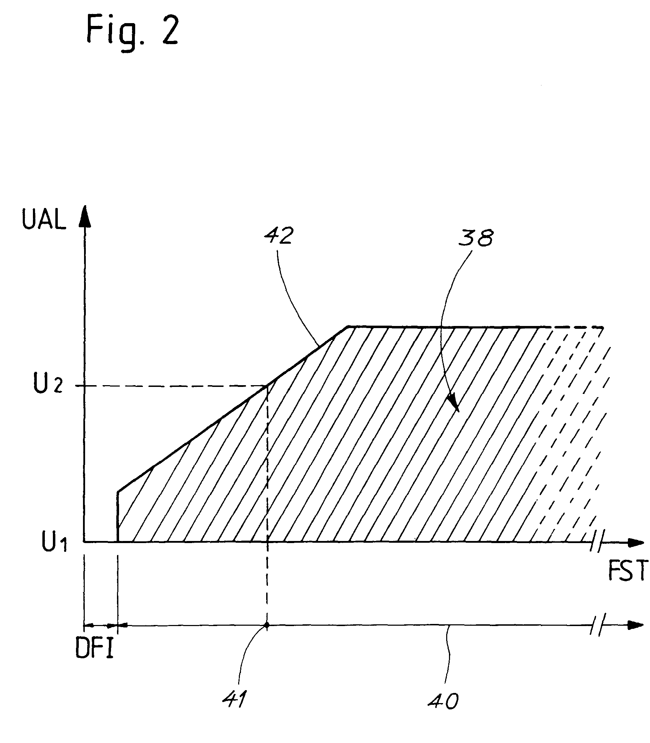

En se référant aux figures 1 et 2, on décrira ci-après de manière schématique le dispositif de commande d'un moteur asynchrone selon l'invention et le fonctionnement de cette commande.

Sur la figure 1, le moteur asynchrone 2 comprend un stator 4 et un rotor 6, le stator 4 comprenant un bobinage 8 relié à des moyens d'alimentation électrique 10.

Les moyens d'alimentation électrique 10, nommées par la suite l'alimentation électrique, sont agencés de manière à fournir une tension d'alimentation alternative, variable indépendamment en amplitude et en fréquence, susceptible d'engendrer un courant d'alimentation IAL dans le bobinage 8 du stator 4. Le courant d'alimentation IAL fournit par l'alimentation électrique 10 est également alternatif et par exemple triphasé.

Des alimentations électriques permettant de produire une tension alternative dont la fréquence et l'amplitude peuvent être variées indépendamment l'une de l'autre aux bornes d'un bobinage sont connues de l'homme de métier. Par exemple, de telles alimentations électriques comportent un modulateur de largeur d'impulsions ("PWM : Pulse-Width-Modulator" en anglais) actionnant un commutateur de puissance, ce dernier étant relié à une source d'énergie électrique dont la valeur de la tension qu'elle fournit est sensiblement constante. Une telle source d'énergie électrique est par exemple formée par une batterie pouvant être installée dans un véhicule électrique.

Le bobinage statorique 8 est agencé de telle manière que ledit courant d'alimentation alternatif circulant dans ce bobinage statorique engendre un champ magnétique tournant à une fréquence statorique FST dans la région du rotor 6, ce dernier ayant une fréquence rotorique FRT de rotation en réponse au flux magnétique tournant. La fréquence de rotation FRT du rotor est mesurée à l'aide d'un détecteur 12 qui produit un signal représentatif de cette fréquence rotorique FRT et le transmet à un additionneur 14 auquel le détecteur 12 est relié.

L'additionneur 14 est également relié à une unité 16 agencée de manière à ce qu'elle fournisse un signal représentatif d'une différence de fréquence fixe DFI, ainsi qu'à une unité 20 de réglage de la différence de fréquence de rotation entre ladite fréquence statorique FST et ladite fréquence rotorique FRT. Cette unité 20 est agencée de manière à produire un signal représentatif d'une différence de fréquence variable DVA en fonction d'un signal de réglage SR1 provenant d'une unité de consigne 30, ce signal étant fourni audit additionneur 14.

L'additionneur 14 est finalement relié à l'alimentation électrique 10 et à une unité 22 de réglage de l'amplitude UAL de la tension d'alimentation auxquels il fournit un signal représentatif d'une fréquence résultante FRS. Ce dernier signal transmis à une entrée 10b de l'alimentation électrique 10 définit pour cette alimentation électrique un signal de commande de la fréquence FAL de la tension d'alimentation sous laquelle elle doit fournir le courant d'alimentation alternatif IAL au moteur 2.

On remarquera que, si le nombre de paires de pôles du bobinage statorique 8 est différent de 1, il est prévu un amplificateur 26 sur le chemin électrique 28 reliant l'additionneur 14 à l'alimentation électrique 10. Cet amplificateur 26 engendre un signal qui définit dans ce cas-ci le signal de commande de la fréquence FAL de la tension d'alimentation sous laquelle l'alimentation électrique doit fournir le courant d'alimentation alternatif IAL au moteur 2.

Si le nombre de paires de pôles du bobinage statorique 8 est P, la fréquence statorique FST du champ magnétique tournant dans la région du rotor 6 est donnée par la relation mathématique suivante : $FST = FAL/P$ . Il est donc prévu que l'amplificateur 26 multiplie le signal représentatif de la fréquence résultante FRS par ledit facteur P. Ainsi, si on néglige les temps de retard dûs à l'inertie du dispositif de commande selon l'invention, la fréquence résultante FRS est égale à la fréquence statorique FST.

Sur la base de la fréquence résultante FRS et d'un signal de réglage SR2 fourni par l'unité de consigne 30, l'unité 22 détermine une valeur pour l'amplitude UAL de la tension d'alimentation et transmet cette valeur sous forme d'un signal à une entrée 10a de l'alimentation électrique 10, ce signal définissant un signal de commande de l'amplitude UAL de la tension d'alimentation.

Le fonctionnement général de la commande de la figure 1 est décrit ci-après à l'aide de la figure 2.

La figure 2 définit un domaine d'alimentation 38 sur un graphe donnant l'amplitude UAL de la tension d'alimentation en fonction de la fréquence statorique FST, la valeur de cette dernière étant un multiple entier de la valeur de la fréquence FAL de la tension d'alimentation. L'ensemble des valeurs que la fréquence statorique FST est susceptible de prendre définit une plage 40 de valeurs de fréquence accessibles à cette fréquence statorique FST.

Pour chaque valeur de fréquence 41 comprise dans la plage de valeurs de fréquence 40, l'amplitude UAL de la tension d'alimentation est susceptible de varier entre une valeur minimale U1 et une valeur maximale U2, ces valeurs étant définies de manière spécifique pour chaque valeur de fréquence 41 de ladite plage 40. L'ensemble des valeurs maximales U2 définit une courbe limite de tension 42.

Le dispositif de commande selon l'invention est agencé de manière que premièrement, la fréquence statorique FST, dont la valeur est définie par la fréquence résultante FRS, est égale à la somme de la fréquence rotorique FRT et de la différence de fréquence fixe DFI tant que l'amplitude UAL de la tension d'alimentation, définie par l'unité 22, a une valeur inférieure à la valeur maximale U2 pour cette fréquence statorique FST, ce qui correspond à une valeur nulle pour la différence de fréquence variable DVA, et que deuxièmement, la différence de fréquence variable DVA est susceptible d'avoir une valeur non-nulle lorsque l'amplitude UAL de la tension d'alimentation est égale à une valeur maximale U2 appartenant à la courbe limite de tension 42.

Pour ce faire, l'unité 22 est premièrement agencée de manière que, pour une valeur quelconque de la fréquence résultante FRS, le signal de l'amplitude UAL de la tension d'alimentation qu'elle fournit à l'alimentation électrique 10, en réponse au signal le réglage SR2, prend une valeur inférieure à la valeur maximale U2 correspondant à cette valeur de la fréquence résultante FRS pour un ensemble E1 non-vide de valeurs accessibles au signal de réglage SR2. Conjointement, les unités 20 et 30 sont agencées de manière que le signal de réglage SR1 prend une valeur dans un ensemble E2 non-vide de valeurs accessibles à ce signal de réglage SR1 lorsque la valeur du signal de réglage SR2 appartient à l'ensemble E1, et que dans ce cas-ci l'unité 20 produit à sa sortie un signal représentatif d'une différence de fréquence variable DVA dont la valeur est nulle.

Deuxièmement, l'unité 22 est agencée de manière que, pour une valeur quelconque de la fréquence résultante FRS, ledit signal de l'amplitude UAL a une valeur égale à la valeur maximale U2 correspondant à cette valeur de la fréquence résultante FRS pour un ensemble E3 non-vide de valeurs accessibles au signal de réglage SR2. Conjointement, les unités 20 et 30 sont agencées de manière que le signal de réglage SR1 prend une valeur dans un ensemble E4 non-vide de valeurs accessibles à ce signal de réglage SR1 lorsque la valeur du signal de réglage SR2 appartient à l'ensemble E3, et que dans ce cas-ci l'unité 20 produit à sa sortie, pour au moins une valeur de réglage SR1 appartenant à l'ensemble E4, un signal représentatif d'une différence de fréquence variable DVA dont la valeur est non-nulle.

Le dispositif de commande d'un moteur asynchrone selon l'invention permet ainsi de faire fonctionner le moteur à un régime optimal sur sensiblement tout le domaine d'alimentation 38 et aussi d'exploiter au maximum les possibilités du moteur asynchrone utilisé lorsque cela est demandé.

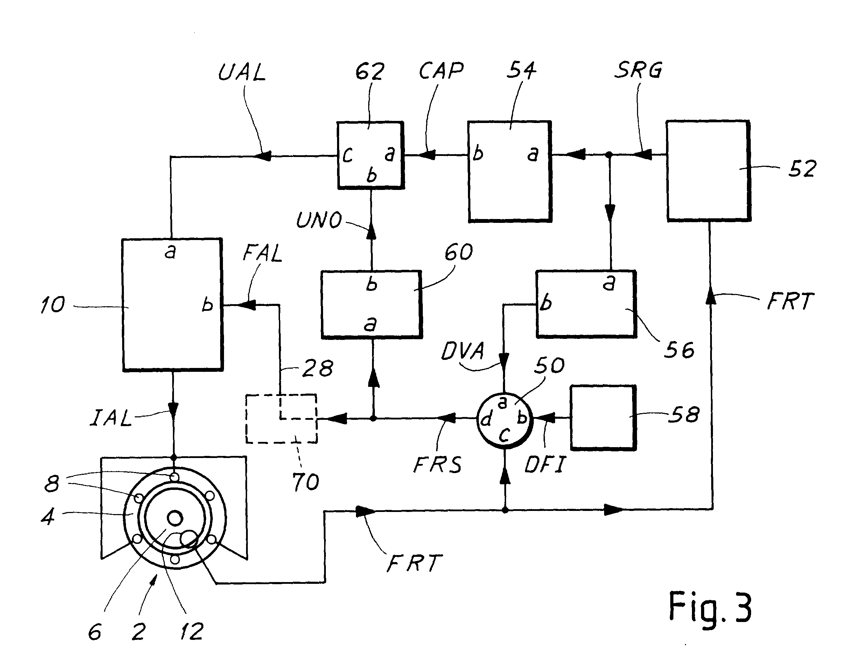

A l'aide des figures 3 à 7, on décrira ci-après un premier mode de réalisation d'un dispositif de commande d'un moteur asynchrone selon l'invention.

Sur la figure 3, le moteur asynchrone 2 comprend un stator 4 et un rotor 6, le stator 4 comportant un bobinage 8 relié à une alimentation électrique 10.

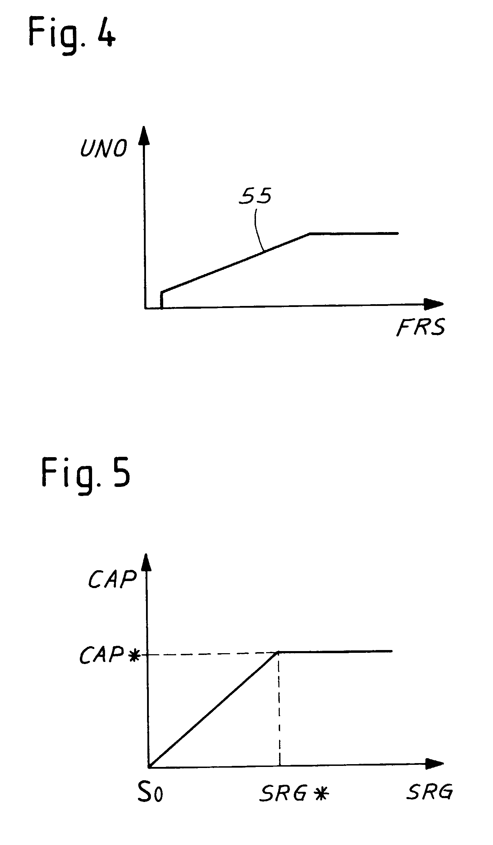

Un détecteur 12 de la fréquence de rotation FRT du rotor est relié à l'entrée 50c d'un additionneur 50, ainsi qu'à une unité de consigne 52. L'unité de consigne 52 est encore reliée à l'entrée 54a d'une unité 54 de détermination d'un coefficient d'amplification et à l'entrée 56a d'une unité 56 de réglage de la différence de fréquence de rotation entre la fréquence statorique et la fréquence rotorique. La sortie 56b de l'unité 56 est reliée à l'entrée 50a de l'additionneur 50. Une unité 58 produisant un signal représentatif d'une différence de fréquence fixe et prédéterminée DFI est également reliée à une entrée 50b de l'additionneur 50. La sortie 50d de ce dernier est reliée à l'entrée 10b de l'alimentation électrique 10, ainsi qu'à l'entrée 60a d'une unité 60 dans laquelle est mémorisée une courbe tension-fréquence normalisée 55 représentée schématiquement à la figure 4.

La sortie 60b de l'unité 60 est reliée à l'entrée 62b d'un multiplicateur 62 qui a encore une entrée 62a reliée à une sortie 54b de l'unité 54 servant à déterminer le coefficient d'amplification CAP. Finalement, la sortie 62c du multiplicateur 62 est reliée à l'entrée 10a de l'alimentation électrique 10.

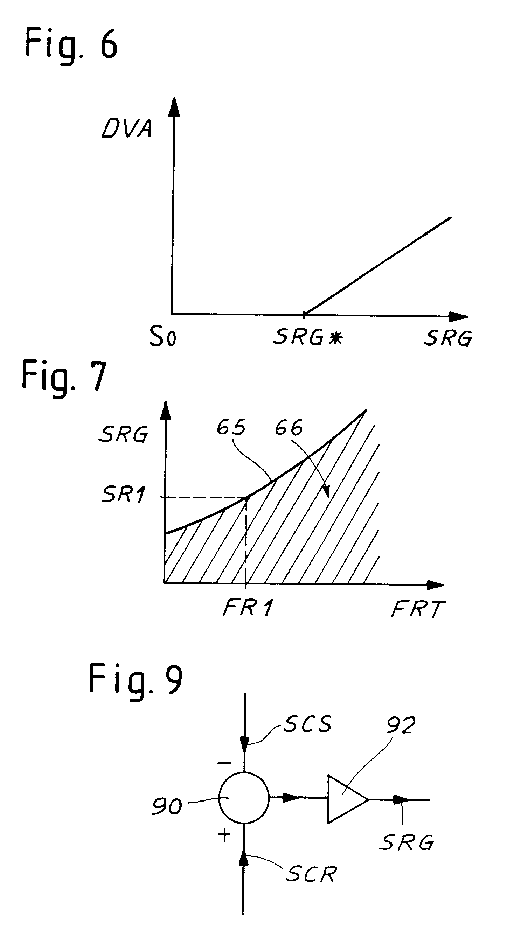

Le fonctionnement de ce dispositif de commande selon l'invention est décrit ci-après. L'unité de consigne 52 est agencée de manière à produire un signal de réglage SRG, les valeurs susceptibles d'être prises par ce signal de réglage dépendant de la fréquence de rotation FRT du rotor dont la valeur est communiquée à l'unité de consigne 52 par le moyen du détecteur 12. Sur la figure 7 est représenté schématiquement le domaine 65 des valeurs que le signal de réglage est susceptible de prendre en fonction de la fréquence de rotation FRT du rotor et en particulier la valeur de réglage maximale SR1 pour chaque valeur FR1 de cette fréquence de rotation du rotor, la courbe limite 66 de ce domaine 65 étant définie par les caractéristiques du moteur 2 utilisé.

Le signal de réglage SRG produit par l'unité de consigne 52 est transmis à l'unité 54 et à l'unité 56. L'unité 54, en réponse au signal de réglage SRG produit un signal représentatif d'un coefficient d'amplification CAP. L'unité 56 produit, en réponse au signal de réglage SRG, un signal représentatif d'une différence de fréquence variable DVA transmis à l'additionneur 50.

L'additionneur 50 additionne le signal DVA avec le signal DFI et le signal FRT. L'additionneur 50 produit un signal résultant de cette addition qui est représentatif d'une fréquence résultante FRS. Ce signal résultant est transmis à l'alimentation électrique 10 par l'intermédiaire d'un amplificateur 70, ce dernier étant nécessaire seulement si le nombre de paires de pôles du bobinage statorique 8 est différent de 1. Dans ce dernier cas, l'amplificateur 70 multiplie le signal par un nombre entier P correspondant au nombre de paires de pôles du bobinage statorique 8. Ledit signal résultant définit un signal de commande de la fréquence FAL de la tension d'alimentation pour l'alimentation électrique 10.

Le signal représentatif de la fréquence résultante FRS est également transmis à l'unité 60 qui fournit en réponse à ce signal un signal représentatif d'une amplitude normalisée UNO de tension. On notera que la courbe 55, qui détermine l'amplitude normalisée UNO de tension en fonction de la fréquence résultante FRS, est proportionnelle à la courbe limite de tension 42 représentée schématiquement à la figure 2.

La tension normalisée UNO est multipliée dans le multiplicateur 62 par le coefficient d'amplification CAP fournit par l'unité 54. Le multiplicateur 62 fournit alors à l'alimentation électrique 10 un signal de commande de l'amplitude UAL de la tension d'alimentation, cette alimentation électrique 10 alimentant en tension le bobinage statorique 8 du moteur 2 avec cette amplitude UAL en réponse à ce signal fourni.

Le fonctionnement du dispositif de commande selon l'invention décrit à l'aide des figures 1 et 2 est atteint en particulier grâce à la caractéristique de l'unité 54 représentée à la figure 5, cette dernière servant à déterminer le coefficient d'amplification CAP, et à la caractéristique de l'unité 56 représentée à la figure 6, cette dernière servant au réglage de la différence de fréquence entre la fréquence statorique FST et la fréquence rotorique FRT.

Sur les figures 5 et 6, on observe que la valeur de la différence de fréquence variable DVA est fixée à zéro tant que le signal de réglage SRG est en-dessous d'une valeur donnée SRG*. D'un autre côté, le coefficient d'amplification CAP augmente de manière sensiblement linéaire en fonction du signal de réglage SRG entre la valeur initiale S0 et la valeur SRG*. On notera toutefois qu'il est possible de prévoir que la différence de fréquence variable DVA augmente légèrement et progressivement entre la valeur 50 et la valeur SRG* du signal de réglage SRG pour optimaliser au mieux le rendement du moteur asynchrone.

Pour la valeur SRG*, le coefficient d'amplification CAP atteint sa valeur maximale CAP*. Quand le signal de réglage SRG est supérieur à SRG*, le coefficient d'amplification est maintenu à la valeur maximale CAP*. Ce coefficient CAP* est déterminé de manière que la courbe tension-fréquence normalisée 55 de la figure 4 multipliée par ce coefficient CAP* donne la courbe limite de tension 42 représentée schématiquement à la figure 2, cette courbe limite de tension 42 étant prédéterminée en fonction des caractéristiques et des dimensions du moteur.

Ainsi, tant que le signal de réglage SRG est en-dessous de la valeur SRG*, la fréquence résultante FRS,

équivalente à la fréquence statorique FST, correspond à la fréquence rotorique à laquelle on a ajouté une différence de fréquence fixe DFI optimale. D'un autre côté, selon la valeur donnée au signal de réglage SRG entre la valeur initiale S0 et la valeur SRG*, le signal représentatif de l'amplitude UAL de la tension d'alimentation transmise par le multiplicateur 62 à l'alimentation électrique 10 est susceptible de varier, pour chaque valeur de la fréquence résultante FRS équivalente à la fréquence statorique FST représentée à la figure 2, entre la valeur minimale U1 et la valeur maximale U2 appartenant à la courbe de tension limite 42, comme représenté schématiquement sur cette figure 2.

Le signal de réglage SRG* correspond donc à un réglage transitoire entre deux régimes d'alimentation. En effet, lorsque la valeur du signal de réglage SRG est supérieure à la valeur SRG*, le coefficient d'amplification CAP garde une valeur constante CAP*, ce qui a pour effet que le signal de commande de l'amplitude UAL de la tension d'alimentation est représentatif d'une valeur de la courbe de tension limite 42, quelle que soit la valeur de la fréquence résultante FRS. Lorsque le signal de réglage SRG est égal à SRG*, on a atteint, pour une fréquence rotorique FRT donnée, le moment de force maximal fourni par le moteur 2 pour une différence de fréquence fixe DFI entre la fréquence statorique et la fréquence rotorique.

Au delà de la valeur SRG*, le moment de force fourni par le moteur est augmenté, pour une fréquence rotorique FRT donnée, en augmentant la différence de fréquence de rotation entre la fréquence statorique FST et cette fréquence rotorique FRT, comme cela est représenté sur la figure 6. Ainsi, le signal représentatif de la différence de fréquence variable DVA, produit par l'unité 56 et fourni à l'additionneur 50, est supérieur à zéro lorsque le signal de réglage SRG a une valeur supérieure à SRG*. Cette augmentation de la différence de fréquence de rotation entre la fréquence statorique et la fréquence rotorique est majorée en fonction de la fréquence de rotation FRT du rotor par la courbe limite 65 représentée sur la figure 7. On notera que, de manière avantageuse, la différence de fréquence variable DVA est maintenue constante lorsqu'elle a atteint une valeur maximale prédéterminée; c'est-à-dire qu'à partir d'une certaine valeur du signal de réglage, une augmentation de ce signal de réglage n'engendre plus d'augmentation de la différence de fréquence variable DVA.

En résumé, l'amplitude UAL de la tension d'alimentation augmente, pour une fréquence de rotation FRT du rotor donnée, entre la valeur minimale U1 et la valeur maximale U2, prédéterminées pour la fréquence statorique FST égale à cette fréquence rotorique FRT à laquelle on a ajouté une différence de fréquence fixe DFI optimale, lorsque le signal de réglage augmente entre la valeur initiale S0 et la valeur SRG*. Ensuite, en admettant que la fréquence rotorique reste constante et que la valeur du signal de réglage continue d'augmenter au-dessus de la valeur SRG*, la différence de fréquence entre la fréquence statorique FST et la fréquence rotorique FRT augmente, ce qui correspond à une augmentation du glissement, et l'amplitude de la tension d'alimentation sous laquelle la source d'énergie électrique alimente le moteur 2 prend la valeur maximale possible pour la valeur de la fréquence résultante FRS, respectivement fréquence statorique FST résultant de l'augmentation de la différence de fréquence.

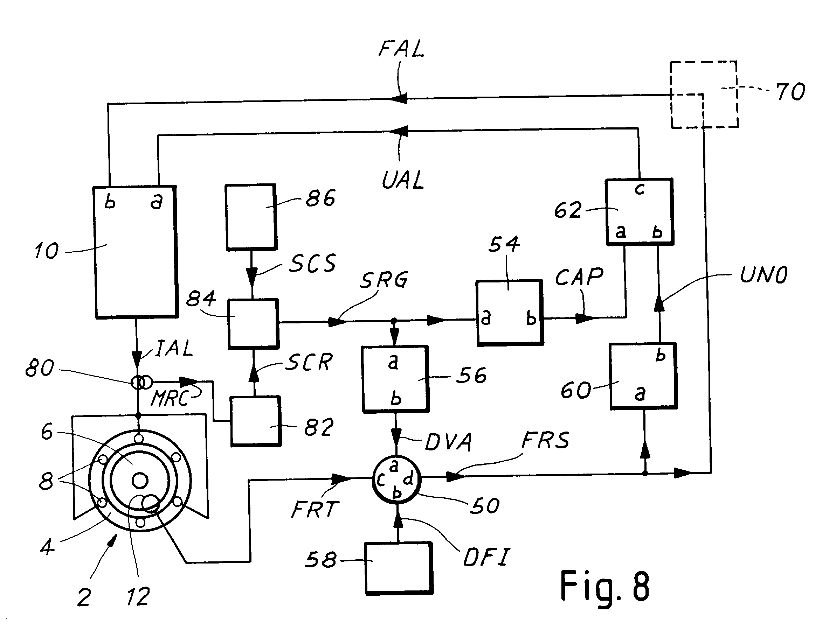

Sur la figure 8 est représenté un deuxième mode de réalisation d'un dispositif de commande selon l'invention, ce dispositif de commande selon l'invention servant à régler le courant d'alimentation IAL.

Pour ce faire, un instrument 80 de mesure du courant d'alimentation IAL circulant entre l'alimentation électrique 10 et le bobinage statorique 8 est prévu. Dans le cas où le courant d'alimentation IAL est triphasé, seule la mesure du courant sur deux phases est nécessaire, comme cela est représenté schématiquement sur la figure 8

Le dispositif 80 de mesure du courant d'alimentation produit un signal MRC représentatif de la mesure du courant qui est transmis à une unité 82 de traitement de ce signal. Cette unité 82 produit en réponse au signal MCR un signal traité SCR qui est transmis à une unité 84 chargée de produire le signal de réglage SRG. L'unité 84 est encore reliée à une unité 86 servant d'organe de consigne, par exemple une pédale d'accélération d'un véhicule électrique. Cette unité 86 produit un signal de consigne SCS transmis à l'unité 84. Ainsi, l'unité 84 produit un signal de réglage SRG en réponse aux deux signaux SCR et SCS.

Un mode de réalisation de l'électronique de l'unité 84 produisant le signal de réglage SRG est représenté à la figure 9. Sur cette figure, on observe que le signal de consigne SCS et le signal traité SCR de la mesure du courant d'alimentation IAL sont soustraits l'un de l'autre à l'aide d'un différentiateur 90. Le résultat de cette différentiation est alors transmis à un régulateur 92 proportionnel à l'intégral. Le signal sortant du régulateur 92 (notamment un signal de tension) constitue dans ce cas-ci le signal de réglage SRG.

Le reste de la commande selon le deuxième mode de réalisation représenté sur la figure 8 est semblable au premier mode de réalisation représenté sur la figure 3 à l'exception de la limitation de la valeur du signal de réglage SRG en fonction de la valeur de la fréquence rotorique FRT comme représenté sur la figure 7. En effet, il est prévu une valeur maximale pour le signal de consigne qui impose une valeur maximale au courant d'alimentation IAL et assure pour toute fréquence rotorique un fonctionnement en-dessous du point de saturation du moteur.

Grâce à l'électronique de régulation représentée à la figure 9, la valeur du signal de réglage SRG varie tant que la valeur SCR du signal traité de la mesure du courant MCR est différent de la valeur de consigne SCS. Par contre, lorsque SCR et SCS sont égaux, la valeur du signal de réglage SRG reste constante. La valeur maximale du signal de consigne SCS que l'unité 86 est susceptible de transmettre à l'unité 84 de production du signal de réglage SRG détermine ainsi la valeur maximale pour le courant d'alimentation IAL du moteur asynchrone 2, cette valeur maximale étant prédéterminée en fonction des caractéristiques de ce moteur asynchrone 2.

## Revendications

1. Dispositif de commande d'un moteur asynchrone (2), ce dernier comprenant :

   - un bobinage statorique (8) agencé de manière à produire un champ magnétique tournant à une fréquence statorique (FST) en réponse à une tension d'alimentation alternative appliquée audit bobinage statorique et produisant un courant d'alimentation (IAL);
   - un rotor (6) comportant un bobinage rotorique couplé magnétiquement audit bobinage statorique, ce rotor ayant une fréquence rotorique (FRT) de rotation en réponse audit champ magnétique tournant;

   ledit dispositif de commande comprenant des moyens d'alimentation électrique (10) agencés de manière à produire ladite tension d'alimentation avec une amplitude (UAL) déterminée par la valeur d'un premier signal de commande et avec une fréquence (FAL) déterminée par la valeur d'un deuxième signal de commande, le premier signal de commande étant fourni à une première entrée (10a) desdits moyens d'alimentation électrique par des premiers moyens de réglage (22;54,60,62) de l'amplitude (UAL) de la tension d'alimentation et le deuxième signal de commande étant fourni, à une deuxième entrée (10b) desdits moyens d'alimentation électrique, par des deuxièmes moyens de réglage (12,14,16,20;12,50,56,58) de la fréquence (FAL) de la tension d'alimentation, ce dispositif de commande étant caractérisé en ce que lesdits premiers et deuxièmes moyens de réglage de la tension d'alimentation sont agencés de manière que, pour chaque valeur de ladite fréquence statorique (FST), ladite amplitude (UAL) de la tension d'alimentation est susceptible de varier en fonction d'un premier signal de réglage (SR2;SRG) entre une valeur minimale (U1) et une valeur maximale (U2) définies pour chaque valeur (41) de ladite fréquence statorique, l'ensemble desdites valeurs maximales (U2) définissant -une courbe limite de tension (42), ladite fréquence (FAL) de la tension d'alimentation étant réglée de manière que la différence de fréquence de rotation entre ladite fréquence statorique (FST) et ladite fréquence rotorique (FRT) est maintenue sensiblement constante tant que ladite amplitude (UAL) de la tension d'alimentation a une valeur inférieure à ladite valeur maximale (U2) définie pour cette valeur de la fréquence statorique.

2. Dispositif de commande selon la revendication 1, caractérisé en ce que lesdits premiers et deuxièmes moyens de réglage de la tension d'alimentation sont agencés de manière que ladite différence de fréquence est susceptible d'être augmentée en fonction d'un deuxième signal de réglage (SR1; SRG) lorsque, pour une valeur (41) de la fréquence statorique (FST), ladite amplitude (UAL) de la tension d'alimentation a une valeur égale à ladite valeur maximale (U2) définie pour cette valeur de la fréquence statorique.

3. Dispositif de commande selon la revendication 1 ou 2, caractérisé en ce que lesdits deuxièmes moyens de réglage de la fréquence statorique comprennent :

   - des premiers moyens de mesure (12) de ladite fréquence rotorique (FRT) de rotation dudit rotor (6) ;
   - une première unité (16;58) capable de fournir un signal représentatif d'une différence de fréquence fixe (DFI) ;
   - une deuxième unité (20;56) de réglage de ladite différence de fréquence de rotation entre ladite fréquence statorique (FST) et ladite fréquence rotorique (FRT) capable de fournir à une sortie (56b) de cette deuxième unité un signal représentatif d'une différence de fréquence variable (DVA) en réponse audit deuxième signal de réglage (SR1;SRG) fourni à une entrée (56a) de cette deuxième unité par une troisième unité de consigne (52)
   - un additionneur (14;50) dont les entrées (50a, 50b,50c) sont reliées auxdits premiers moyens de mesure et auxdites première et deuxième unités et dont la sortie (50d) est reliée à ladite seconde entrée (10b) desdits moyens d'alimentation électrique (10) et auxdits moyens (22;54,60,62) de réglage de l'amplitude (UAL) de la tension d'alimentation, cet additionneur sommant ladite fréquence rotorique (FRT) avec ladite différence de fréquence fixe (DFI) et ladite différence de fréquence variable (DVA) pour fournir à sa sortie un signal représentatif d'une fréquence résultante (FRS) définissant ledit deuxième signal de commande.

4. Dispositif de commande selon la revendication 3, caractérisé en ce que lesdits premiers moyens de réglage de l'amplitude (UAL) de la tension d'alimentation comprennent :

   - une quatrième unité (60) dont une entrée (60a) est reliée à la sortie (50d) dudit additionneur (50) et dans laquelle est mémorisée une courbe tension-fréquence normalisée (55) permettant de déterminer et de fournir à une sortie (60b) de cette quatrième unité un signal représentatif d'une amplitude (UNO) de tension normalisée en fonction dudit signal représentatif de ladite fréquence résultante (FRS) provenant dudit additionneur ;
   - une cinquième unité (54), dont une entrée (54a) est reliée à ladite troisième unité de consigne (52), permettant de déterminer et de fournir à une sortie (54b) de cette cinquième unité un coefficient d'amplification (CAP) en réponse audit premier signal de réglage (SR2 ; SRG) fourni par ladite troisième unité de consigne (52) ;
   - un multiplicateur (62), dont les entrées (62a, 62b) sont reliées auxdites quatrième et cinquième unités et dont la sortie (62c) est reliée à ladite première entrée (10a) desdits moyens d'alimentation électrique, permettant d'effectuer une multiplication entre ladite amplitude (UNO) de tension normalisée, provenant de la quatrième unité, et ledit coefficient d'amplification (CAP) provenant de la cinquième unité, le résultat de ladite multiplication définissant ledit premier signal de commande étant transmis à ladite première entrée (10a) desdits moyens d'alimentation électrique.

5. Dispositif de commande selon la revendication 4, caractérisé en ce qu'un amplificateur (70) est prévu sur le chemin électrique (28) reliant ledit additionneur (14,50) auxdits moyens d'alimentation électrique (10), cet amplificateur multipliant ledit signal représentatif de ladite fréquence résultante (FRS) par un facteur (P) correspondant à un nombre de paires de pôles dudit bobinage statorique (8) dudit moteur (2).

6. Dispositif de commande selon la revendication 4 ou 5, caractérisé en ce que ledit premier signal de réglage (SR2;SRG) et ledit deuxième signal de réglage (SR1;SRG) définissent un seul et même signal de réglage (SRG).

7. Dispositif de commande selon la revendication 6, caractérisé en ce que lesdits premiers moyens de mesure (12) sont reliés à ladite troisième unité de consigne (52), cette dernière déterminant pour chaque valeur (FR1) de ladite fréquence rotorique (FRT) une valeur maximale (SR1) pour ledit seul et même signal de réglage (SRG).

8. Dispositif de commande selon la revendication 6 ou 7, caractérisé en ce que ladite troisième unité de consigne (52) comprend des deuxièmes moyens de mesure (80,82) dudit courant d'alimentation (IAL), un dispositif de réglage (84) et un organe de consigne (86), lesdits deuxièmes moyens de mesure étant reliés audit dispositif de réglage (84) auquel ils transmettent un signal de mesure (SCR), ce dispositif de réglage étant aussi relié audit organe de consigne (86), qui lui fournit un signal de consigne (SCS), ce dispositif de réglage produisant ledit seul et même signal de réglage (SRG) en réponse audit signal de consigne (SCS) et audit signal de mesure (SCR).

9. Dispositif de commande selon la revendication 8, caractérisé en ce que ledit dispositif de réglage (84) comprend un différentiateur (90) qui effectue une soustraction entre ledit signal de consigne (SCS) et ledit signal traité (SCR), le résultat de ladite soustraction étant transmis à un régulateur (92), notamment un régulateur proportionnel à l'intégrale, qui produit ledit seul et même signal de réglage (SRG).

10. Dispositif de commande selon l'une quelconque des revendications 3 à 9, caractérisé en ce que ladite troisième unité de consigne (52) comprend des moyens d'accélération d'un véhicule électrique, ledit moteur (2) auquel est destiné ledit dispositif de commande servant de moyens de traction de ce véhicule électrique.

**Patentansprüche**

1. Steuereinrichtung eines Asynchronmotors (2), letzterer umfassend:

- eine derart angeordnete Statorwicklung (8), daß sie ein bei einer Statorfrequenz (FST) drehendes Magnetfeld in Reaktion auf eine an die Statorwicklung angelegte Versorgungswechselspannung und einen Versorgungsstrom (IAL) erzeugt;
- einen Rotor (6), umfassend eine magnetisch mit der Statorwicklung gekoppelte Rotorwicklung, wobei dieser Rotor eine Rotordrehfrequenz (FRT) in Reaktion auf das drehende Magnetfeld aufweist;

wobei die Steuereinrichtung elektrische Versorgungsmittel (10) umfaßt, die derart angeordnet sind, daß die Versorgungsspannung mit einer durch den Wert eines ersten Steuersignals bestimmten Amplitude (UAL) und mit einer durch den Wert eines zweiten Steuersignals bestimmten Frequenz (FAL) erzeugt wird, wobei das erste Steuersignal an einem ersten Eingang (10a) der elektrischen Versorgungsmittel über erste Regelmittel (22; 54, 60, 62) der Amplitude (UAL) der Versorgungsspannung abgegeben wird, und wobei das zweite Steuersignal an einem zweiten Eingang (10b) der elektrischen Versorgungsmittel über zweite Regelmittel (12, 14, 16, 20; 12, 50, 56, 58) der Frequenz (FAL) der Versorgungsspannung abgegeben wird, wobei diese Steuereinrichtung dadurch gekennzeichnet ist, daß die ersten und zweiten Regelmittel der Versorgungsspannung derart ausgebildet sind, daß für jeden Wert der Statorfrequenz (FST) die Amplitude (UAL) der Versorgungsspannung in Funktion eines ersten Regelsignals (SR2; SRG) zwischen einem für jeden Wert (41) der Statorfrequenz definierten Minimalwert (U1) und Maximalwert (U2) veränderlich ist, wobei die Gesamtheit der Maximalwerte (U2) eine Grenzkurve (42) der Spannung definiert, wobei die Frequenz (FAL) der Versorgungsspannung derart geregelt wird, daß die Drehfrequenzdifferenz zwischen der Statorfrequenz (FST) und der Rotorfrequenz (FRT) im wesentlichen konstant gehalten wird solange die Amplitude (UAL) der Versorgungsspannung einen kleineren Wert als den für diesen Wert der Statorfrequenz definierten Maximalwert (U2) annimmt.

2. Steuereinrichtung nach Anspruch 1, dadurch gekennzeichnet, daß die ersten und zweiten Regelmittel der Versorgungsspannung derart ausgebildet sind, daß die Frequenzdifferenz in Funktion eines zweiten Regelsignals (SR1; SRG) erhöhbar ist, wenn für einen Wert (41) der Statorfrequenz (FST) die Amplitude (UAL) der Versorgungsspannung einen Wert gleich dem für diesen Wert der Statorfrequenz definierten Maximalwert (U2) hat.

3. Steuereinrichtung nach Anspruch 1 oder 2, dadurch gekennzeichnet, daß die zweiten Regelmittel der Statorfrequenz umfassen:

- erste Meßmittel (12) der Rotordrehfrequenz (FRT) des Rotors (6);
- eine erste Einheit (16; 58), die in der Lage ist, ein für eine feste Frequenzdifferenz (DFI) repräsentatives Signal zu liefern;
- eine zweite Einheit (20; 56) für die Regelung der Drehfrequenzdifferenz zwischen der Statorfrequenz (FST) und der Rortorfrequenz (FRT), die in der Lage ist, einem Ausgang (56b) dieser zweiten Einheit ein Signal zu liefern, das für eine variable Frequenzdifferenz (DVA) in Reaktion auf das zweite Regelsignal (SR1; SRG) repräsentativ ist, welches an einem Eingang (56a) dieser zweiten Einheit durch eine dritte Sollwert-Einheit (52) abgegeben wird;
- ein Addierglied (14; 50), dessen Eingänge (50a, 50b, 50c) mit den ersten Meßmitteln, mit der ersten und zweiten Einheit verbunden sind und dessen Ausgang (50d) mit dem zweiten Eingang (10b) der elektrischen Versorgungsmittel (10) und mit den Regelmitteln (22; 54, 60, 62) der Amplitude (UAL) der Versorgungsspannung verbunden ist, wobei das Addierglied die Rotorfrequenz (FRT), die feste Frequenzdifferenz (DFI) und die variable Frequenzdifferenz (DVA) aufsummiert, um seinem Ausgang ein für eine resultierende Frequenz (FRS), die das zweite Steuersignal definiert, repräsentatives Signal zu liefern.

4. Steuereinrichtung nach Anspruch 3, dadurch gekennzeichnet, daß die ersten Regelmittel für die Amplitude (UAL) der Versorgungsspannung umfassen:

- eine vierte Einheit (60), deren einer Eingang (60a) mit dem Ausgang (50d) des Addierglieds (50) verbunden ist, und in welcher eine normalisierte Spannungs-Frequenz-Kurve (55) gespeichert ist, die es ermöglicht, einem Ausgang (60b) dieser vierten Einheit ein für eine Amplitude (UNO) der normalisierten Spannung repräsentatives Signal als Funktion des für die von dem Addierglied stammenden resultierenden Frequenz (FRS) repräsentativen Signals zu bestimmen und abzugeben;
- eine fünfte Einheit (54), deren einer Eingang (54a) mit der dritten Sollwert-Einheit (52) verbunden ist, die es ermöglicht, einem Ausgang (54b) dieser fünften Einheit einen Verstärkungskoeffizienten (CAP) in Reaktion auf das von der dritten Sollwert-Einheit (52) gelieferte ersten Regelsignal (SR2; SRG) zu bestimmen und abzugeben;
- ein Multiplizierglied (62), dessen Eingänge (62a, 62b) mit der vierten und fünften Einheit verbunden sind, und dessen Augang (62c) mit dem ersten Eingang (10a) der elektrischen Versorgungsmittel verbunden ist, wodurch die Ausführung einer Multiplikation zwischen der von der vierten Einheit stammenden Amplitude (UNO) der normalisierten Spannung und dem von der fünften Einheit stammenden Verstärkungsfaktors (CAP) ermöglicht wird, wobei das Ergebnis der Multiplikation das erste Steuersignal definiert, das dem ersten Eingang (10a) der elektrischen Versorgungsmittel übertragen wird.

5. Steuereinrichtung nach Anspruch 4, dadurch gekennzeichnet, daß ein Verstärker (70) in dem elektrischen Pfad (28), der das Addierglied (14, 50) mit den elektrischen Versorgungsmitteln (10) verbindet, vorgesehen ist, wobei dieser Verstärker das für die resultierende Frequenz repräsentative Signal (FRS) mit einen Faktor (P) multipliziert, der einer Anzahl von Polpaaren der Statorwicklung (8) des Motors (2) entspricht.

6. Steuereinrichtung nach Anspruch 4 oder 5, dadurch gekennzeichnet, daß das erste Regelsignal (SR2; SRG) und das zweite Regelsignal (SR1; SRG) ein einunddasselbe Regelsignal (SRG) definieren.

7. Steuereinrichtung nach Anspruch 6, dadurch gekennzeichnet, daß die ersten Meßmittel (12) mit der dritten Sollwert-Einheit (52) verbunden sind, wobei letztere für jeden Wert (FR1) der Rotorfrequenz (FRT) einen Maximalwert (SR1) für einunddasselbe Regelsignal (SRG) bestimmt.

8. Steuereinrichtung nach Anspruch 6 oder 7, dadurch gekennzeichnet, daß die dritte Sollwert-Einheit (52) zweite Meßmittel (80, 82) des Versorgungsstroms (IAL), eine Regeleinrichtung (84) und ein Sollwert-Organ (86) umfaßt, wobei die zweiten Meßmittel mit der Regeleinrichtung (84) verbunden sind, der sie ein Meßsignal (SCR) übermitteln, wobei diese Regeleinrichtung auch mit dem Sollwert-Organ (86) verbunden ist, welches ihr ein Sollwert-Signal (SCS) zuführt, wobei die Regeleinrichtung einunddasselbe Regelsignal (SRG) in Reaktion auf das Sollwert-Signal (SCS) und auf das Meßsignal (SCR) erzeugt.

9. Steuereinrichtung nach Anspruch 8, dadurch gekennzeichnet, daß die Regeleinrichtung (84) ein Differenzierglied (90), das eine Subtraktion zwischen dem Sollwert-Signal (SCS) und dem verarbeiteten Signal (SCR) ausführt, umfaßt, wobei das Ergebnis der Subtraktion einem Regler (92), insbesondere einem Proportional-Integral-Regler, übermittelt wird, welcher einunddasselbe Regelsignal (SRG) erzeugt.

10. Steuereinrichtung nach einem der Ansprüche 3 bis 9, dadurch gekennzeichnet, daß die dritte Sollwert-Einheit (52) Mittel zur Beschleunigung eines Elektrofahrzeugs umfaßt, wobei der Motor (2) dem die Steuereinrichtung zugeordnet ist, als Antriebsmittel dieses Elektrofahrzeugs dient.

**Claims**

1. Device for controlling an asynchronous motor (2), the latter having :

- a stator winding (8) arranged to produce a turning magnetic field at a stator frequency (FST) in response to an AC supply voltage applied to said stator winding and producing a supply current (IAL);
- a rotor (6) comprising a rotor winding magnetically coupled to said stator winding, this rotor rotating at a rotor frequency (FRT) in response to said turning magnetic field;

said control device comprising electric supply means (10) arranged to produce said supply voltage with an amplitude (UAL) determined by the value of a first control signal and with a frequency (FAL) determined by the value of a second control signal, the first control signal being supplied to a first input (10a) of said electric supply means by first means (22;54,60,62) for regulating the amplitude (UAL) of the supply voltage, and the second control signal being supplied to a second input (10b) of said electric supply means by second means (12,14,16,20; 12,50,56,58) for regulating the frequency (FAL) of the supply voltage, such control device being characterized in that said first and second means for regulating the supply voltage are arranged so that, for each value of said stator frequency (FST), said amplitude (UAL) of the supply voltage is able to vary as a function of a first regulation signal (SR2;SRG) between a minimum value (U1) and a maximum value (U2) which are defined for each value (41) of said stator frequency, said maximum values (U2) together defining a limiting voltage curve (42), said supply voltage frequency (FAL) being regulated so that the difference of frequency in rotation frequency between said stator frequency (FST) and said rotor frequency (FRT) is maintained substantially constant as long as said supply voltage amplitude (UAL) has a value less than said maximum value (U2) defined for the given value of the stator frequency.

2. Control device according to claim 1, characterized in that said first and second regulation means for the supply voltage are arranged so that said frequency difference can be increased as a function of a second regulation signal (SR1,SRG) when, for a value (41) of the stator frequency (FST), said supply voltage amplitude (UAL) has a value equal to said maximum value (U2) defined for said value of the stator frequency.

3. Control device according to claim 1 or 2, characterized in that said second means for regulating the stator frequency comprise :

- first means (12) for measuring said frequency of rotation (FRT) of said rotor (6);
- a first unit (16;58) able to supply a signal representing of a fixed frequency difference (DFI);
- a second unit (20;56) for regulating said difference in rotation frequency between said stator frequency (FST) and said rotor frequency (FRT) able to supply at an output (56b) of said second unit a signal representing a variable frequency difference (DVA) in response to said second regulation signal (SR1;SRG) applied to an input (56a) of said second unit by a third instruction unit (52);

- an adder (14;50) whose inputs (50a,50b,50c) are connected to said first measuring means and to said first and second units and whose output (50d) is connected to said second input (10b) of said electric supply means (10) and to said means (22;54,60,62) for regulating the supply voltage amplitude (UAL), this adder adding said rotor frequency (FRT) to said fixed frequency difference (DFI) and to said variable frequency difference (DVA) to supply at its output a signal representing a resulting frequency (FRS) defining said second control signal.

4. Control device according to claim 3, characterized in that said first means for regulating the amplitude (UAL) of the supply voltage comprise :

- a fourth unit (60) having an input (60a) connected to the output (50d) of said adder (50) and in which is memorized a normalized voltage-frequency curve (55) enabling a signal representing a normalized voltage amplitude (UNO) to be produced and supplied at an output (60b) of said fourth unit in dependence upon of said signal representing said resulting frequency (FRS) from said adder;
- a fifth unit (54), having an input (54a) connected to said third instruction unit (52), enabling an amplification coefficient (CAP) to be produced and supplied at an output (54b) of said fifth unit in response to said first regulation signal (SR2,SRG) supplied by said third instruction unit (52);
- a multiplier (62), whose inputs (62a,62b) are connected to said fourth and fifth units and whose output (62c) is connected to said first input (10a) of said electric supply means, enabling a multiplication to be carried out between said normalized voltage amplitude (UNO) from the fourth unit and said amplification coefficient (CAP) from the fifth unit, the result of said multiplication defining said first control signal being transmitted to said first input (10a) of said electric supply means.

5. Control device according to claim 4, characterized in that an amplifier (70) is provided in the electric path (28) connecting said adder (14,50) to said electric supply means (10), this amplifier multiplying said signal representing said resulting frequency (FRS) by a factor (P) corresponding to an even number of poles of said stator winding (8) of said motor (2).

6. Control device according to claim 4 or 5, characterized in that said first regulation signal (SR2;SRG) and said second regulation signal (SR1;SRG) define a common regulation signal (SRG).

7.  Control device according to claim 6, characterized in that said first measuring means (12) are connected to said third instruction unit (52), the latter determining for each value (FR1) of said rotor frequency (FRT) a maximum value (SR1) for said common regulation signal (SRG).

8.  Control device according to claim 6 or 7, characterized in that said third instruction unit (52) comprises second means (80,82) for measuring said supply current (IAL), a regulation device (84) and an instruction member (86), said second measuring means being connected to said regulation device (84) to which they apply a measuring signal (SCR), said regulation device being also connected to said instruction member (86) which supplies thereto an instruction signal (SCS), said regulation device producing said common regulation signal (SRG) in response to said instruction signal (SCS) and to said measuring signal (SCR).

9.  Control device according to claim 8, characterized in that said regulation device (84) comprises a differentiator (90) which carries out a subtraction between said instruction signal (SCS) and said processed signal (SCR), the result of said subtraction being transmitted to a regulator (92), in particular a proportional-integral regulator that produces said common regulation signal (SRG).

10. Control device according to any one of claims 3 to 9, characterized in that said third instruction unit (52) comprises means for accelerating an electric vehicle, said motor (2) with which the said control device is associated serving as means for driving said electric vehicle.

EP 0 579 948 B1

# Fig. 1

UAL   SR 2

FAL   28

10   a

b   26

8   IAL

4

6   14

12   +   DFI   DVA

2   FRT   20

16   SR1

30

22

FRS

13

## Fig. 2

EP 0 579 948 B1

Fig. 3

EP 0 579 948 B1

Fig. 4

UNO

55

FRS

Fig. 5

CAP

CAP*

S₀    SRG*    SRG

16

EP 0 579 948 B1

Fig. 6

DVA

S₀        SRG*        SRG

Fig. 7

SRG

SR1                65    66

FR1        FRT

Fig. 9

SCS        92

90    −

    +

SCR

SRG

17

Fig. 8